# DEMANDE DE BREVET EUROPEEN

(11) **EP 1 858 272 A1**
(43) Date de publication de la demande: **21.11.2007**
(21) Numéro de dépôt: 07108270.5
(22) Date de dépôt: 15.05.2007
(51) Int. Cl.: H04Q 7/22

(54) **Procédé et système de transmission d'informations locales sélectives**

(30) Priorité: 17.05.2006 FR 0604424
(71) Demandeur: JCDecaux SA, 92200 Neuilly-Sur-Seine (FR)
(72) Inventeur: Le Gars, Jacques, 78950 Gambais (FR)
(74) Mandataire: Cabinet Plasseraud

(57) **Abrégé**

Système de transmission d'informations sélectives locales comprenant des bases d'information (2) adaptées pour communiquer des informations vers des mobiles (3) par une liaison radio courte portée. Le système comporte en outre des bases de configuration (1) adaptées pour établir avec les mobiles une liaison radio très courte portée et pour mémoriser, dans une mémoire (6) accessible aux bases d'information, une adresse identifiant le mobile et une information personnelle qui est communiquée par l'utilisateur du mobile.

## Description

La présente invention est relative aux procédés et systèmes de transmission d'informations sélectives locales.

Plus particulièrement, l'invention concerne un procédé de transmission d'informations sélectives locales comprenant au moins une étape d'information au cours de laquelle on communique des informations locales sélectives (c'est-à-dire sélectionnées notamment en fonction de l'emplacement de la base d'information et le cas échéant en fonction du mobile) depuis des bases d'information vers au moins un mobile au moyen d'une liaison radio courte portée en utilisant un protocole de communication radio prédéterminé, ladite liaison radio courte portée ayant une portée nominale inférieure à 200m, lesdites bases d'information communiquant avec un serveur central.

Le document WO-A-01/89189 décrit un exemple d'un tel procédé.

La présente invention a pour but de perfectionner encore les procédés de ce type, notamment pour faciliter l'identification des utilisateurs des mobiles.

A cet effet, selon l'invention, un procédé du genre en question est caractérisé en ce qu'il comporte en outre une étape initiale d'identification au cours de laquelle :
- on approche le mobile d'une base de configuration et on établit entre ledit mobile et ladite base de configuration une liaison radio très courte portée en utilisant ledit protocole de communication radio, ladite liaison radio très courte portée ayant une portée nominale inférieure à 2 m,
- et on mémorise dans ledit serveur central au moins une adresse identifiant le mobile selon ledit protocole de communication radio et une information personnelle (comprenant un ou plusieurs données) qui est communiquée par un utilisateur du mobile, ladite étape initiale d'identification étant réalisée une fois pour toutes, avant toute étape d'information.

Grâce à ces dispositions, lorsque le mobile entre ultérieurement dans la zone couverte par une base d'information, l'adresse du mobile est donnée à la base d'information lors de l'établissement de la liaison radio courte portée entre le mobile et la base d'information, puis ladite base d'information peut retrouver l'information personnelle associée à cette adresse personnelle, et ainsi personnaliser les informations transmises au mobile.

Dans divers modes de réalisation du procédé selon l'invention, on peut éventuellement avoir recours en outre à l'une et/ou à l'autre des dispositions suivantes :
- l'information personnelle communiquée au cours de l'étape d'identification comprend le type du mobile et au cours de l'étape d'information, les données locales sélectives transmises au mobile sont formatées en fonction du type du mobile ;
- l'information personnelle communiquée au cours de l'étape d'identification comprend au moins un centre d'intérêt de l'utilisateur du mobile et au cours de l'étape d'information, les données locales sélectives transmises au mobile sont fonction dudit centre d'intérêt.

Par ailleurs, l'invention a également pour objet un système de transmission d'informations sélectives locales comprenant des bases d'information adaptées pour communiquer des informations vers au moins un mobile au moyen d'une liaison radio courte portée en utilisant un protocole de communication radio prédéterminé, ladite liaison radio courte portée ayant une portée nominale inférieure à 200 m, lesdites bases d'information communiquant avec un serveur central,
caractérisé en ce qu'il comporte en outre au moins une base de configuration adaptée pour établir avec ledit mobile une liaison radio très courte portée en utilisant ledit protocole de communication radio, ladite liaison radio très courte portée ayant une portée nominale inférieure à 2 m, ladite base de configuration étant adaptée pour mémoriser, dans le serveur central, au moins une adresse identifiant le mobile selon ledit protocole de communication radio et au moins une donnée personnelle qui est communiquée par un utilisateur du mobile.

Dans divers modes de réalisation du système selon l'invention, on peut avoir recours en outre à l'une et/ou à l'autre des dispositions suivantes :
- la liaison radio très courte portée a une portée nominale inférieure à 50 cm ;
- la base de configuration est adaptée pour demander à l'utilisateur du mobile d'entrer ladite information personnelle sur le mobile et pour rapatrier ensuite cette information personnelle ;
- la base de configuration est adaptée pour demander à l'utilisateur du mobile d'entrer le type du mobile et pour mémoriser le type du mobile dans ladite mémoire, et la base d'information est adaptée pour formater les données locales sélectives transmises au mobile, en fonction du type du mobile ;
- la base de configuration est adaptée pour demander à l'utilisateur du mobile de donner un centre d'intérêt et pour mémoriser ce centre d'intérêt dans ladite mémoire, et la base d'information est adaptée pour sélectionner les données locales sélectives transmises au mobile, en fonction dudit centre d'intérêt ;
- le protocole de communication radio est choisi parmi les protocoles BLUETOOTH, ZIGBEE et WI-FI.

D'autres caractéristiques et avantages de l'invention apparaîtront au cours de la description suivante de deux de ses modes de réalisation, donnés à titre d'exemples non limitatifs, en regard des dessins joints.

Sur les dessins :
- la figure 1 est un schéma d'ensemble d'un système de transmission d'information selon une première forme de réalisation de l'invention,
- la figure 2 est une vue en perspective montrant une station de location automatique de bicyclettes incluant une borne d'information appartenant au système de la figure 1,
- la figure 3 est un schéma bloc de la borne d'information de la figure 2,
- et la figure 4 est un schéma bloc similaire à la figure 3 dans une deuxième forme de réalisation de l'invention.

Sur les différentes figures, les mêmes références désignent des éléments identiques ou similaires.

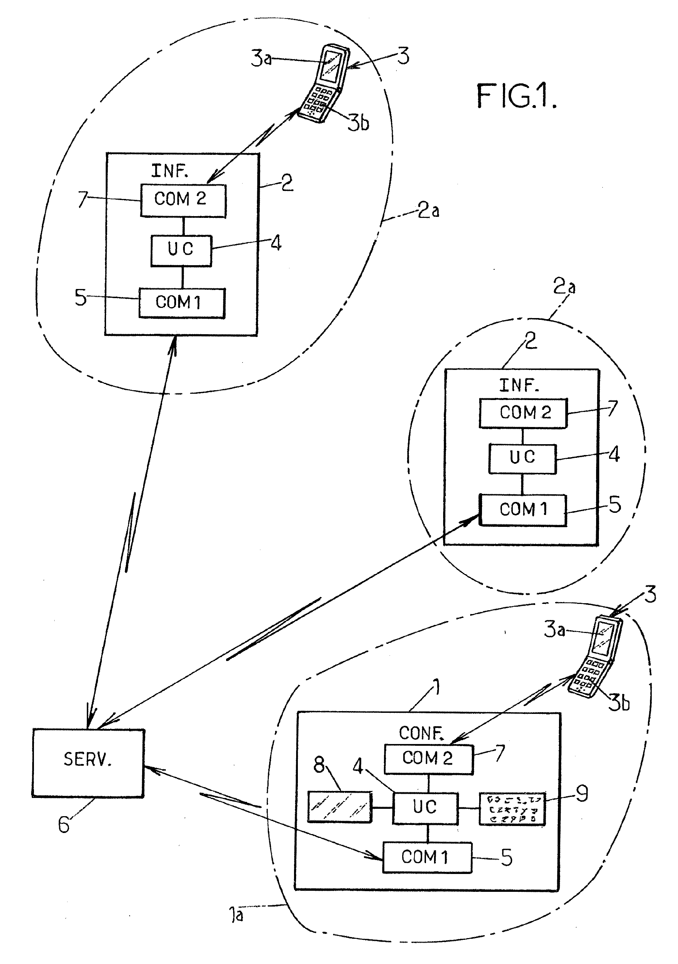

La figure 1 représente un système de transmission d'informations locales sélectives, qui comprend au moins une base de configuration 1 (CONF.) généralement fixe (de préférence, le système selon l'invention peut comprendre plusieurs bases de configuration 1) et une pluralité de bases d'information 2 (INF.) réparties sur un certain territoire, par exemple sur le territoire d'une ville. Le nombre de bases d'information 2 pourrait le cas échéant être réduit à 1, bien que cette configuration ne soit pas préférée.

Chacune des bases 1, 2 est adaptée pour communiquer par une liaison radio avec un mobile 3, selon un protocole de radiocommunication prédéterminé, par exemple le protocole BLUETOOTH (norme IEEE 802.15.1) ou le protocole ZIGBEE (norme IEEE 802.15.4), ou éventuellement le protocole WI-FI (norme IEEE 802.11).

La liaison radio de la base de configuration 1 est limitée à une très courte portée nominale (portée définie par exemple dans des conditions normalisées), de l'ordre de quelques centimètres, dans les tous cas inférieure à 2 m et de préférence inférieure à 50 cm (par exemple, inférieure à 10 cm), tandis que les bases d'information 2 permettent une liaison radio courte portée, avec une portée nominale de quelques dizaines de mètres et généralement inférieure à 200 m. La zone géographique couverte par la liaison radio très courte portée de la borne de configuration 1 est schématisée par la limite la sur la figure 1, et les zones géographiques couvertes par les liaisons radio courte portée des bornes d'information 2 sont schématisées par les limites 2a sur la figure 1.

Les mobiles 3 peuvent être par exemple des téléphones cellulaires pourvus d'une interface de liaison radio de courte portée fonctionnant selon le protocole de communication radio susmentionné (par exemple, BLUETOOTH ou ZIGBEE comme indiqué précédemment), ou encore, des assistants personnels ou tous autres appareils électroniques possédant une telle interface de liaison radio et dotés d'une interface de sortie telle qu'un écran 3a et d'une interface d'entrée telle qu'un clavier 3b ou autre.

Les bases de configuration 1 et d'information 2, quant à elles, sont des dispositifs électroniques comprenant chacun :
- une unité centrale électronique 4 (UC) telle qu'un microprocesseur, microcontrôleur ou autre,
- une première interface de communication 5 (COM 1) reliée à l'unité centrale 4 et adaptée pour communiquer avec un serveur central 6 (SERV.) qui peut par exemple être commun à l'ensemble des bases 1, 2 du territoire considéré (la communication entre les bases 1, 2 et le serveur peut être réalisée par liaison filaire ou radio),
- et une deuxième interface de communication radio 7 (COM 2) reliée à l'unité centrale 4 et adaptée pour réaliser ladite liaison radio, respectivement très courte portée pour la base de configuration 1 ou courte portée pour les bases d'information 2.

La base de configuration 1 peut comprendre en outre une interface de sortie telle qu'un écran 8 et une interface d'entrée telle qu'un clavier 9, reliés à l'unité centrale 4.

Le système de transmission d'information qui vient d'être décrit fonctionne comme suit.

Lorsqu'un utilisateur souhaite pouvoir recevoir des informations locales sélectives, dépendant par exemple à la fois de l'endroit où il se trouve et de ses centres d'intérêt personnels, il procède à une étape initiale d'identification auprès du système de transmission d'informations.

A cet effet, l'utilisateur présente son mobile 3 à proximité immédiate de la borne de configuration 1, de façon que son mobile 3 puisse entrer en communication avec ladite base de configuration 1, par la liaison radio à très courte portée susmentionnée.

Le protocole de communication radio étant adapté pour l'établissement de réseaux ad hoc, cette liaison s'établit d'elle-même.

Lors de l'établissement de la liaison, la base de configuration reçoit du mobile 3, un code d'adresse unique identifiant ce mobile dans le protocole de communication radio utilisé. S'il s'agit du protocole BLUETOOTH, l'adresse en question est l'adresse MAC. On notera que, compte tenu de la très courte portée de la liaison radio, on peut être certain que l'adresse ainsi reçue par la base de configuration 1 est celle du bon mobile 3.

Une fois établie la liaison entre le mobile 3 et la base de configuration 1, la base de configuration 1 peut demander à l'utilisateur du mobile 3 une information personnelle, comprenant une ou plusieurs données personnelles choisies par exemple parmi :
- le type du téléphone mobile (ce type étant défini par exemple par la marque du fabricant et le nom du modèle dans la gamme de ce fabricant),
- d'un ou plusieurs centres d'intérêt de l'utilisateur du mobile 3.

L'information personnelle susmentionnée peut être demandée à l'utilisateur par l'intermédiaire de l'écran 8 de la base de configuration et les réponses de l'utilisateur peuvent être données par exemple au moyen de l'interface d'entrée 9 de ladite base de configuration.

On notera que, selon une autre variante, l'information personnelle en question pourrait être entrée dans la base de configuration 1 ou directement dans le serveur 6 par une personne appartenant à un service commercial, après que le mobile 3 soit entré en communication avec la base de configuration 1.

Lorsque la base de configuration 1 a collecté l'adresse du mobile 3 et l'information personnelle susmentionnée, elle transmet cette adresse et cette information personnelle au serveur 6 (dans le cas où l'information personnelle serait entrée directement par le personnel commercial dans le serveur 6, la base de configuration 1 ne communiquerait que l'adresse du mobile 3 au serveur 6).

Une fois terminée l'étape initiale d'identification, le mobile 3 est apte à recevoir des informations sélectives locales depuis les bases d'information 2, c'est-à-dire des informations dépendant de l'emplacement de chaque base d'information et/ou de l'information personnelle communiquée au serveur 6 lors de l'étape d'identification.

Ainsi, chaque fois que le mobile 3 entre dans la portée 2a d'une borne d'information 2, se déroule une étape d'information au cours de laquelle le mobile 3 entre automatiquement en communication radio avec la base d'information 2 selon ledit protocole de communication radio susmentionné. Lors de l'établissement de cette communication, la base d'information 2 reçoit l'adresse qui identifie le mobile 3 selon ledit protocole de communication radio et interroge le serveur 6 pour recevoir tout ou partie de l'information personnelle correspondant à cette adresse.

Ainsi, le serveur 6 peut par exemple envoyer à la base d'information 2 le type du mobile 3 et des centres d'intérêt de l'utilisateur du mobile 3. La base d'information 2 sélectionne alors, dans une base de données d'information mémorisée localement ou non, les informations correspondant aux centres d'intérêt de l'utilisateur, puis transmet ces informations au mobile 3 par la liaison radio courte portée, selon un format compatible avec le mobile 3. L'utilisateur peut ensuite consulter lesdites informations sur l'écran 3a de son mobile.

On notera que la base de données d'information pourrait être centralisée uniquement sur le serveur 6, auquel cas, lorsqu'il est interrogé par la base d'information 2, le serveur 6 lui communiquerait, d'une part, le type du mobile 3 et, d'autre part, directement les informations correspondant au centre d'intérêt de l'utilisateur du mobile.

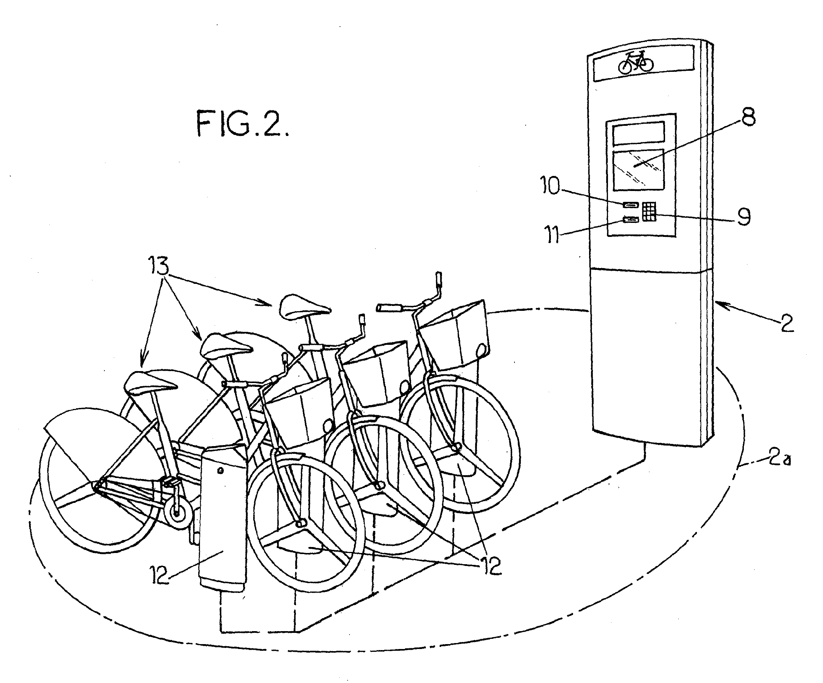

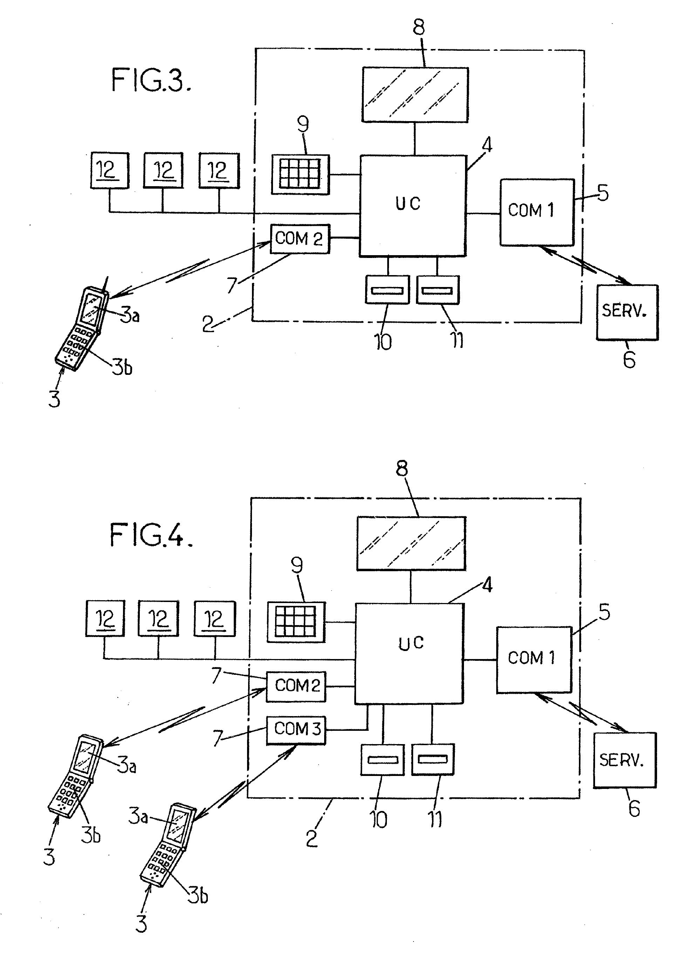

A titre d'exemple non limitatif, on a représenté sur les figures 2 et 3 un exemple de base d'information 2 qui peut par exemple se présenter sous la forme d'une borne interactive équipant une station de location automatique de bicyclettes 13. Dans l'exemple représenté sur la figure 2, cette borne interactive comprend, outre un écran 8 et un clavier 9, un lecteur de carte portative électronique 10 tel que des cartes d'accès ou des cartes de paiement, et un dispositif d'impression de tickets 11, destinés par exemple à confirmer un paiement ou une autorisation de prélèvement sur un compte de carte de paiement.

Outre la borne interactive 2, la station de location automatique de bicyclette comporte une pluralité de dispositifs de verrouillage 12 tels que des bornes ou autres sur lesquelles peuvent se verrouiller les bicyclettes 13 destinées à être louées.

Les dispositifs de verrouillage 12 peuvent être commandés par la borne interactive 2, par exemple comme décrit dans le document WO-A-02/095698 ou dans le document WO-A-2006/021650.

Ainsi, lorsqu'un utilisateur enregistré dans le système de transmission d'informations sélectives locales empreinte une bicyclette 13 ou la rend, il rentre dans la portée 2a de la base d'information 2, laquelle portée peut correspondre sensiblement à la zone de stockage des bicyclettes 13 sur les dispositifs de verrouillage 12.

Le mobile 3 de l'utilisateur reçoit alors, par exemple, le plan du cartier avec le cas échéant les stations de transport en commun les plus proches, ou des informations sur les monuments ou les centres d'attrait touristiques proches de la station de location automatique de bicyclettes, ou autres.

Le cas échéant, la borne d'information 2 peut envoyer les informations en question, uniquement si elles détectent le retour d'une bicyclette 13 par verrouillage sur son dispositif de verrouillage 12, et non lorsqu'un bicyclette 13 est empruntée.

En variante, comme représenté sur la figure 4, la borne interactive 2 peut être dotée d'une interface de communication 7 supplémentaire (COM 3) fonctionnant selon ledit protocole de communication radio mais présentant une très courte portée comme défini précédemment pour la borne de configuration 1, de sorte que la borne interactive 2 peut alors servir à la fois de borne d'information et de borne de configuration.

## Revendications

1. Procédé de transmission d'informations sélectives locales comprenant au moins une étape d'information au cours de laquelle on communique des informations locales sélectives depuis des bases d'information (2) vers au moins un mobile (3) au moyen d'une liaison radio courte portée en utilisant un protocole de communication radio prédéterminé, ladite liaison radio courte portée ayant une portée nominale inférieure à 200 m, lesdites bases d'information (2) communiquant avec un serveur central (6),
**caractérisé en ce qu'**il comporte en outre une étape initiale d'identification au cours de laquelle :
- on approche le mobile (3) d'une base de configuration (1;2) et on établit entre ledit mobile (3) et ladite base de configuration (1;2) une liaison radio très courte portée en utilisant ledit protocole de communication radio, ladite liaison radio très courte portée ayant une portée nominale inférieure à 2 m,
- et on mémorise dans ledit serveur central (6) au moins une adresse identifiant le mobile (3) selon ledit protocole de communication radio et une information personnelle qui est communiquée par un utilisateur du mobile, ladite étape initiale d'identification étant réalisée une fois pour toutes, avant toute étape d'information.

2. Procédé selon la revendication 1, dans lequel l'information personnelle communiquée au cours de l'étape d'identification comprend le type du mobile (3) et au cours de l'étape d'information, les données locales sélectives transmises au mobile sont formatées en fonction du type du mobile (3).

3. Procédé selon l'une quelconque des revendications précédentes, dans lequel l'information personnelle communiquée au cours de l'étape d'identification comprend au moins un centre d'intérêt de l'utilisateur du mobile (3) et au cours de l'étape d'information, les données locales sélectives transmises au mobile (3) sont fonction dudit centre d'intérêt.

4. Système de transmission d'informations sélectives locales comprenant des bases d'information (2) adaptées pour communiquer des informations vers au moins un mobile (3) au moyen d'une liaison radio courte portée en utilisant un protocole de communication radio prédéterminé, ladite liaison radio courte portée ayant une portée nominale inférieure à 200 m, lesdites bases d'information (2) communiquant avec un serveur central (6),
**caractérisé en ce qu'**il comporte en outre au moins une base de configuration (1;2) adaptée pour établir avec ledit mobile (3) une liaison radio très courte portée en utilisant ledit protocole de communication radio, ladite liaison radio très courte portée ayant une portée nominale inférieure à 2 m, ladite base de configuration (1;2) étant adaptée pour mémoriser, dans le serveur central (6), au moins une adresse identifiant le mobile (3) selon ledit protocole de communication radio et au moins une donnée personnelle qui est communiquée par un utilisateur du mobile (3).

5. Système selon la revendication 4, dans lequel la liaison radio très courte portée a une portée nominale inférieure à 50 cm.

6. Système selon l'une quelconque des revendications 4 et 5, dans lequel la base de configuration (1;2) est adaptée pour demander à l'utilisateur du mobile d'entrer ladite information personnelle sur le mobile (3) et pour rapatrier ensuite cette information personnelle.

7. Système selon la revendication 6, dans lequel la base de configuration (1;2) est adaptée pour demander à l'utilisateur du mobile (3) d'entrer le type du mobile et pour mémoriser le type du mobile dans ladite mémoire (6), et la base d'information (2) est adaptée pour formater les fonction du type du mobile.

8. Système selon l'une quelconque des revendications 4 à 7, dans lequel la base de configuration (1;2) est adaptée pour demander à l'utilisateur du mobile (3) de donner un centre d'intérêt et pour mémoriser ce centre d'intérêt dans ladite mémoire (6), et la base d'information (2) est adaptée pour sélectionner les données locales sélectives transmises au mobile (3), en fonction dudit centre d'intérêt.

9. Système selon l'une quelconque des revendications 4 à 8, dans lequel le protocole de communication radio est choisi parmi les protocoles BLUETOOTH, ZIGBEE et WI-FI.
